# EUROPÄISCHE PATENTSCHRIFT

(11) **EP 1 625 173 B1**
(45) Veröffentlichungstag und Bekanntmachung des Hinweises auf die Patenterteilung: **15.08.2007**
(21) Anmeldenummer: 04731336.6
(22) Anmeldetag: 06.05.2004
(51) Int. Cl.: C08G 69/02

(54) **POLYAMIDE**
POLYAMIDES
POLYAMIDES

(30) Priorität: 14.05.2003 DE 10321788
(43) Veröffentlichungstag der Anmeldung: 15.02.2006
(73) Patentinhaber: BASF Aktiengesellschaft, 67056 Ludwigshafen (DE)
(72) Erfinder: WINTERLING, Helmut, 67061 Ludwigshafen (DE); DEMETER, Jürgen, 67069 Ludwigshafen (DE); DEININGER, Jürgen, 68723 Oftersheim (DE); KORY, Gad, 69251 Gaiberg (DE); SÖTJE, Oliver, 68199 Mannheim (DE); WILMS, Axel, 67256 Weisenheim (DE); WEISS, Robert, 67281 Kirchheim (DE); KREMPEL, Kurt, 67127 Rödersheim-Gronau (DE); BENISCH, Christoph, 68165 Mannheim (DE)
(86) Internationale Anmeldenummer: PCT/EP2004/004817
(87) Internationale Veröffentlichungsnummer: WO 2004/101648

(56) Entgegenhaltungen:
- EP-A- 0 083 907
- US-A- 5 639 819
- US-A- 6 094 816

## Beschreibung

Die vorliegende Erfindung betrifft ein Polyamid, dessen Hauptkette 1-Amino-2-R-cyclopent-1-en, wobei R eine gegenüber einer Aminogruppe zur Ausbildung einer Amidgruppe fähige funktionelle Gruppe darstellt, oder deren Gemische chemisch gebunden enthält.

Ferner betrifft sie ein Verfahren zur Herstellung eines solchen Polyamids, sowie Fasern, Folien und Formkörper, enthaltend mindestens ein solches Polyamid.

Polyamide, insbesondere Polyamid 6 und Polyamid 6.6, sind technisch bedeutsame Polymere. Zu ihrer Herstellung setzt man üblicherweise geeignete Monomere, wie Caprolactam, Adipinsäure oder Hexamethylendiamin, in Gegenwart von Wasser um.

Nach der Herstellung werden die Polyamide bekanntermaßen verformt, beispielsweise zu Fasern, Folien oder Formkörpern.

Solche Fasern oder daraus hergestellt textile Gegenstände, wie Bekleidung oder Teppichböden, Folien oder Formkörper werden anschließend üblicherweise eingefärbt. Dies kann beispielsweise im Falle von Fasern oder daraus hergestellten textilen Gegenständen mittels Färbebädern oder im Falle von textilen Gegenständen, Folien oder Formkörpern durch Bedrucken geschehen.

Bei diesem Anfärben ist eine hohe Anfärbegeschwindigkeit, also eine rasche Farbaufnahme durch das Polyamid, zur Erzielung einer hohen Prozessgeschwindigkeit wünschenswert.

Der vorliegenden Erfindung lag die Aufgabe zugrunde, ein Polyamid bereitzustellen, das eine gegenüber Polyamiden gemäß Stand der Technik erhöhte Anfärbegeschwindigkeit aufweist, sowie ein Verfahren zur Herstellung eines solchen Polyamids.

Demgemäss wurde das eingangs definierte Polyamid, ein Verfahren zu seiner Herstellung sowie Fasern, Folien und Formkörper, enthaltend mindestens ein solches Polyamid, gefunden.

Unter Polyamiden werden Homopolymere, Copolymere, Mischungen und Pfropfungen von synthetischen langkettigen Polyamiden verstanden, die als wesentlichen Bestandteil wiederkehrend Amid-Gruppen in der Polymer-Hauptkette aufweisen. Beispiele solcher Polyamide sind Nylon 6 (Polycaprolactam), Nylon 6,6 (Polyhexamethylenadipamid), Nylon 4,6 (Polytetramethylenadipamid), Nylon 6,10 (Polyhexamethylensebacamid), Nylon 7 (Polyenantholactam), Nylon 11 (Polyundecanolactam), Nylon 12 (Polydodecanolactam). Diese Polyamide tragen bekanntermaßen den generischen Namen Nylon. Unter Polyamiden werden auch die sogenannten Aramide verstanden (aromatische Polyamide), wie Poly-metaphenylen-isophthalamid (NOMEX^{®} Faser, US-A-3,287,324) oder Poly-paraphenylen-terephthalamid (KEVLAR^{®} Faser, US-A-3,671,542).

Die Herstellung von Polyamiden kann prinzipiell nach zwei Verfahren erfolgen.

Bei der Polymerisation von Dicarbonsäuren und Diaminen, wie auch bei der Polymerisation von Aminosäuren oder deren Derivaten, wie Aminocarbonsäurenitrilen, Aminocarbonsäureamiden, Aminocarbonsäureestern oder Aminocarbonsäuresalzen, reagieren die Amino- und Carboxyl-Endgruppen der Ausgangsmonomere oder Ausgangsoligomere miteinander unter Bildung einer Amid-Gruppe und Wasser. Das Wasser kann anschließend von der Polymermasse entfernt werden. Bei der Polymerisation von A-minocarbonsäureamiden reagieren die Amino- und Amid-Endgruppen der Ausgangsmonomere oder Ausgangsoligomere miteinander unter Bildung einer Amid-Gruppe und Ammoniak. Der Ammoniak kann anschließend von der Polymermasse entfernt werden. Bei der Polymerisation von Aminocarbonsäureestern reagieren die Amino- und Ester-Endgruppen der Ausgangsmonomere oder Ausgangsoligomere miteinander unter Bildung einer Amid-Gruppe und Alkohol. Der Alkohol kann anschließend von der Polymermasse entfernt werden. Bei der Polymerisation von Aminocarbonsäurenitrilen können die Nitrilgruppen zunächst mit Wasser zu Amid- oder Carbonsäuregruppen und die entstandenen Aminocarbonsäureamide oder Aminocarbonsäuren wie beschrieben umgesetzt werden. Diese Polymerisationsreaktion bezeichnet man üblicherweise als Polykondensation.

Die Polymerisation von Lactamen als Ausgangsmonomeren oder Ausgangsoligomeren bezeichnet man üblicherweise als Polyaddition.

Solche Polyamide können nach an sich bekannten Verfahren, wie sie beispielsweise in DE-A-14 95 198, DE-A-25 58 480, EP-A-129 196 oder in: Polymerization Processes, Interscience, New York, 1977, S. 424-467, insbesondere S. 444-446, beschrieben sind, erhalten werden aus Monomeren ausgewählt aus der Gruppe bestehend aus Lactamen, omega-Aminocarbonsäuren, omega-Aminocarbonsäurenitrilen, omega-Aminocarbonsäureamiden, omega-Aminocarbonsäuresalze, omega-Aminocarbonsäureester, äquimolaren Mischungen aus Diaminen und Dicarbonsäuren, Dicarbonsäure/Diamin-Salzen, Dinitrilen und Diaminen oder Gemischen solcher Monomere.

### Als Monomere kommen

Monomere oder Oligomere eines C₂- bis C₂₀- vorzugsweise C₂- bis C₁₈- arylaliphatischen oder vorzugsweise aliphatischen Lactams , wie Enantholactam, Undecanolactam, Dodecanolactam oder Caprolactam,

Monomere oder Oligomere von C₂- bis C₂₀-, vorzugsweise C₃- bis C₁₈-Aminocarbonsäuren, wie 6-Aminocapronsäure, 11-Aminoundecansäure, sowie deren Salze, wie Alkalisalze, beispielsweise Lithium-, Natrium-, Kalium-Salze,

Monomere oder Oigomere von C₂- bis C₂₀-, vorzugsweise C₃- bis C₁₈-Aminocarbonsäurenitrilen, wie 6-Aminocapronitril, 11-Aminoundecansäurenitril,

Monomere oder Oligomere von C₂- bis C₂₀-Aminosäureamiden, wie 6-Aminocapronsäureamid, 11-Aminoundecansäureamid,

Ester, vorzugsweise C₁-C₄-Alkylester, wie Methyl-, Ethyl-, n-Propyl-, i-Propyl-, n-Butyl-, i-Butyl-, s-Butyl-ester, von C₂- bis C₂₀-, vorzugsweise C₃- bis C₁₈-Aminocarbonsäuren, wie 6-Aminocapronsäureester, beispielsweise 6-Aminocapronsäuremethylester, 11-Aminoundecansäureester, beispielsweise 11-Aminoundecansäuremethylester,

Monomere oder Oligomere eines C₂- bis C₂₀-, vorzugsweise C₂- bis C₁₂-Alkyldiamins, wie Tetramethylendiamin oder vorzugsweise Hexamethylendiamin,
mit einer C₂- bis C₂₀-, vorzugsweise C₂- bis C₁₄- aliphatischen Dicarbonsäure oder deren Mono- oder Dinitrile, wie Sebacinsäure, Dodecandisäure, Adipinsäure, Sebacinsäuredinitril, Decan-1,10-dinitril oder Adipodinitril,

Monomere oder Oligomere eines C₂- bis C₂₀-, vorzugsweise C₂- bis C₁₂-Alkyldiamins, wie Tetramethylendiamin oder vorzugsweise Hexamethylendiamin,
mit einer C₈- bis C₂₀-, vorzugsweise C₈- bis C₁₂- aromatischen Dicarbonsäure oder deren Derivate, beispielsweise Chloride, wie 2,6-Naphthalindicarbonsäure, vorzugsweise Isophthalsäure oder Terephthalsäure,

Monomere oder Oligomere eines C₂- bis C₂₀-, vorzugsweise C₂- bis C₁₂-Alkyldiamins, wie Tetramethylendiamin oder vorzugsweise Hexamethylendiamin,
mit einer C₉- bis C₂₀-, vorzugsweise C₉- bis C₁₈- arylaliphatischen Dicarbonsäure oder deren Derivate, beispielsweise Chloride, wie o-, m- oder p-Phenylendiessigsäure, Monomere oder Oligomere eines C₆- bis C₂₀-, vorzugsweise C₆- bis C₁₀- aromatischen Diamins, wie m- oder p-Phenylendiamin,
mit einer C₂- bis C₂₀-, vorzugsweise C₂- bis C₁₄- aliphatischen Dicarbonsäure oder deren Mono- oder Dinitrile, wie Sebacinsäure, Dodecandisäure, Adipinsäure, Sebacinsäuredinitril, Decan-1,10-dinitril oder Adipodinitril,

Monomere oder Oligomere eines C₆- bis C₂₀- vorzugsweise C₆- bis C₁₀- aromatischen Diamins, wie m- oder p-Phenylendiamin,
mit einer C₈- bis C₂₀-, vorzugsweise C₈- bis C₁₂- aromatischen Dicarbonsäure oder deren Derivate , beispielsweise Chloride, wie 2,6-Naphthalindicarbonsäure, vorzugsweise Isophthalsäure oder Terephthalsäure,

Monomere oder Oligomere eines C₆- bis C₂₀- vorzugsweise C₆- bis C₁₀- aromatischen Diamins, wie m- oder p-Phenylendiamin,
mit einer C₉- bis C₂₀-, vorzugsweise C₉- bis C₁₈- arylaliphatischen Dicarbonsäure oder deren Derivate, beispielsweise Chloride, wie o-, m- oder p-Phenylendiessigsäure,

Monomere oder Oligomere eines C₇- bis C₂₀-, vorzugsweise C₈- bis C₁₈- arylaliphatischen Diamins, wie m- oder p-Xylylendiamin,
mit einer C₂- bis C₂₀-, vorzugsweise C₂- bis C₁₄- aliphatischen Dicarbonsäure oder deren Mono- oder Dinitrile, wie Sebacinsäure, Dodecandisäure, Adipinsäure, Sebacinsäuredinitril, Decan-1,10-dinitril oder Adipodinitril,

Monomere oder Oligomere eines C₇- bis C₂₀-, vorzugsweise C₈- bis C₁₈- arylaliphatischen Diamins, wie m- oder p-Xylylendiamin,
mit einer C₆- bis C₂₀-, vorzugsweise C₆- bis C₁₀- aromatischen Dicarbonsäure oder deren Derivate , beispielsweise Chloride, wie 2,6-Naphthalindicarbonsäure, vorzugsweise Isophthalsäure oder Terephthalsäure,

Monomere oder Oligomere eines C₇- bis C₂₀-, vorzugsweise C₈- bis C₁₈- arylaliphatischen Diamins, wie m- oder p-Xylylendiamin,
mit einer C₉- bis C₂₀-, vorzugsweise C₉- bis C₁₈- arylaliphatischen Dicarbonsäure oder deren Derivate, beispielsweise Chloride, wie o-, m- oder p-Phenylendiessigsäure,
sowie Homopolymere, Copolymere, Mischungen und Pfropfungen solcher Ausgangsmonomere oder Ausgangsoligomere in Betracht.

Als Oligomere können insbesondere die Dimeren, Trimeren, Tetrameren, Pentamere oder Hexameren der genannten Monomere oder von Gemischen solcher Monomere eingesetzt werden.

In einer bevorzugten Ausführungsform setzt man als Lactam Caprolactam, als Diamin Tetramethylendiamin, Hexamethylendiamin oder deren Gemische und als Dicarbonsäure Adipinsäure, Sebacinsäure, Dodecandisäure, Terephthalsäure, Isophthalsäure oder deren Gemische ein. Besonders bevorzugt ist als Lactam Caprolactam, als Diamin Hexamethylendiamin und als Dicarbonsäure Adipinsäure oder Terephthalsäure oder deren Gemische.

Besonders bevorzugt sind dabei solche Ausgangsmonomere oder Ausgangsoligomere, die bei der Polymerisation zu den Polyamiden Nylon 6, Nylon 6,6, Nylon 4,6, Nylon 6,10, Nylon 6,12, Nylon 7, Nylon 11, Nylon 12 oder den Aramiden Poly-metaphenylen-isophthalamid oder Poly-paraphenylen-terephthalamid, insbesondere zu Nylon 6 oder Nylon 66, führen.

In einer bevorzugten Ausführungsform kann man bei der Herstellung der Polyamide einen oder mehrere Kettenregler einsetzen. Als Kettenregler kommen vorteilhaft Verbindungen in Betracht, die eine oder mehrere, wie zwei, drei oder vier, im Falle von Systemen in Form von Fasern bevorzugt zwei, bei der Polyamidbildung reaktive Amino-Gruppen oder eine oder mehrere, wie zwei, drei oder vier, im Falle von Systemen in Form von Fasern bevorzugt zwei, bei der Polyamidbildung reaktive Carboxyl-Gruppen aufweisen.

Im ersten Fall erhält man Polyamide, bei denen die zur Herstellung des Polyamids eingesetzten Monomere und Kettenregler eine höhere Zahl an zur Bildung der Polymerkette eingesetzten Amino-Gruppen oder deren Äquivalente als zur Bildung der Polymerkette eingesetzte Carbonsäure-Gruppen oder deren Äquivalente aufweisen.

Im zweiten Fall erhält man Polyamide, bei denen die zur Herstellung des Polyamids eingesetzten Monomere und Kettenregler eine höhere Zahl an zur Bildung der Polymerkette eingesetzten Carbonsäure-Gruppen oder deren Äquivalente als zur Bildung der Polymerkette eingesetzte Amino-Gruppen oder deren Äquivalente aufweisen.

Als Kettenregler können vorteilhaft Monocarbonsäuren, wie Alkancarbonsäuren, beispielsweise Essigsäure, Propionsäure, wie Benzol- oder Naphthalinmonocarbonsäure, beispielsweise Benzoesäure, Dicarbonsäuren, wie C₄-C₁₀-Alkandicarbonsäure, beispielsweise Adipinsäure, Azelainsäure, Sebacinsäure, Dodecandisäure, C₅-C₈-Cycloalkandicarbonsäuren, beispielsweise Cyclohexan-1,4-dicarbonsäure, Benzol- oder Naphthalindicarbonsäure, beispielsweise Terephthalsäure, Isophthalsäure, Naphthalin-2,6-dicarbonsäure, C₂- bis C₂₀-, vorzugsweise C₂- bis C₁₂-Alkylamine, wie Cyclohexylamin, C₆- bis C₂₀-, vorzugsweise C₆- bis C₁₀- aromatische Monoamine, wie Anilin, oder C₇- bis C₂₀-, vorzugsweise C₈- bis C₁₈- arylaliphatische Monoamine, wie Benzylamin, Diamine, wie C₄-C₁₀-Alkandiamine, beispielsweise Hexamethylendiamin eingesetzt werden.

Die Kettenregler können unsubstituiert oder substituiert sein, beispielsweise durch aliphatische Gruppen, vorzugsweise C₁-C₈-Alkylgruppen, wie Methyl, Ethyl, i-Propyl, n-Propyl, n-Butyl, i-Butyl, s-Butyl, n-Pentyl, n-Hexyl, n-Heptyl, n-Octyl, 2-Ethyl-hexyl, OH, =O, C₁-C₈-Alkoxy, COOH, C₂-C₆-Carbalkoxy, C₁-C₁₀-Acyloxy, oder C₁-C₈-Alkylamino, Sulfonsäure oder deren Salze, wie Alkali- oder Erdalkalisalze, Cyano, oder Halogene, wie Fluor, Chlor, Brom. Beispiele für substituierte Kettenregler sind Sulfoisophthalsäure, deren Alkali- oder Erdalkalisalze, wie Lithium-, Natrium oder Kalium-Salze, Sulfoisophthalsäureester, beispielsweise mit C₁-C₁₆-Alkanolen, oder Sulfoisophthalsäuremono- oder diamide, insbesondere mit zur Bildung von Polyamiden geeigneten, mindestens eine Aminogruppe tragenden Monomeren, wie Hexamethylendiamin oder 6-Aminocapronsäure.

Bevorzugt kommen als Kettenregler sterisch gehinderte Piperidin-Derivate der Formel 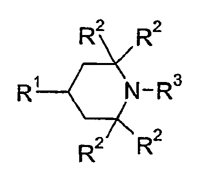 wobei
- R¹: für eine funktionelle Gruppe steht, die zur Amidbildung gegenüber der Polymerkette des Polyamids fähig ist,
vorzugsweise eine Gruppe -(NH)R⁵, wobei R⁵ für Wasserstoff oder C₁-C₈-Alkyl steht, oder eine Carboxylgruppe oder ein Carboxylderivat oder eine Gruppe-(CH₂)ₓNH)R⁵, wobei X für 1 bis 6 steht und R⁵ für Wasserstoff oder C₁-C₈-Alkyl steht, oder eine Gruppe -(CH₂)_{y}COOH, wobei Y für 1 bis 6 steht, oder ein-(CH₂)_{y}COOH Säurederivat, wobei Y für 1 bis 6 steht,
insbesondere für eine Gruppe -NH₂ steht,
- R²: für eine Alkylgruppe steht, vorzugsweise eine C₁-C₄-Alkylgruppe, wie Methyl, Ethyl, n-Propyl, i-Propyl, n-Butyl, i-Butyl, s-Butyl, s-Butyl,
insbesondere eine Methylgruppe,
- R³: für Wasserstoff, C₁-C₄-Alkyl oder O-R⁴ steht, wobei R⁴ für Wasserstoff oder C₁-C₇-Alkyl steht,
insbesondere R³ für Wasserstoff steht,
in Betracht.

in solchen Verbindungen reagieren üblicherweise die tertiären, insbesondere sekundären Aminogruppen der Piperidin-Ringsysteme dabei wegen sterischer Hinderung nicht.

Besonders bevorzugt als sterisch gehindertes Piperidin-Derivat ist 4-Amino-2,2,6,6-Tetramethylpiperidin.

Vorteilhaft kann man einen Kettenregler in Mengen von mindestens 0,001 Mol-%, vorzugsweise mindestens 0,01 Mol-%, insbesondere mindestens 0,03 Mol-%, besonders bevorzugt mindestens 0,08 Mol-%, bezogen auf 1 Mol Säureamidgruppen des Polyamids, einsetzen.

Vorteilhaft kann man einen Kettenregler in Mengen von höchstens 2,0 Mol-%, vorzugsweise höchstens 1 Mol-%, insbesondere höchstens 0,6 Mol-%, besonders bevorzugt höchstens 0,5 Mol-%, bezogen auf 1 Mol Säureamidgruppen des Polyamids, einsetzen.

Erfindungsgemäß enthält die Hauptkette des Polyamids 1-Amino-2-R-cyclopent-1-en, wobei R eine gegenüber einer Aminogruppe zur Ausbildung einer Amidgruppe fähige funktionelle Gruppe darstellt, chemisch gebunden.

Vorteilhaft kommt als R eine funktionelle Gruppe ausgewählt aus der Gruppe bestehend aus Carbonsäure (COOH), Carbonsäureester, Carbonsäureamid und Nitril (CN), insbesondere Nitril, odere deren Gemische in Betracht.

Steht R für einen Carbonsäureester, wie einen Ester eines aromatischen, vorzugsweise aliphatischen Alkohols, insbesondere C₁- bis C₁₆-Alkohols, so kann in einer besonders bevorzugten Ausführungsform R für einen Carbonsäureester ausgewählt aus der Gruppe bestehend aus Methyl-, Ethyl-, n-Propyl-, i-Propyl-, n-Butyl-, s-Butyl-, i-Butyl- oder t-Butylester oder deren Gemische, insbesondere Methylester, stehen.

Steht R für Carbonsäureamid, so kann das Carbonsäureamid unsubstituiert sein, und somit R für die Gruppe CONH₂ stehen, oder substituiert sein durch einen oder zwei aromatische, vorzugsweise aliphatische Reste, insbesondere C₁- bis C₁₆-Reste, besonders bevorzugt ausgewählt aus der Gruppe bestehend aus Methyl-, Ethyl-, n-Propyl-, i-Propyl-, n-Butyl-, s-Butyl-, i-Butyl- oder t-Butyl oder deren Gemische, insbesondere Methyl, stehen, wie N-Methyl- oder N,N-Dimethyl-Amid.

Die Herstellung von Amin 1-Amino-2-R-cyclopent-1-en mit der genannten Bedeutung von R ist an sich bekannt. So kann beispielsweise 1-Amino-2-cyano-cyclopent-1-en durch interne Cyclisierung aus Adipodinitril erhalten werden. Die anderen in Betracht kommenden Verbindungen können beispielsweise erhalten werden durch Umsetzung der Cyanogruppe in 1-Amino-2-cyano-cyclopent-1-en nach an sich bekannten Verfahren, wie teilweise oder vollständige Hydrolyse der Cyanogruppe.

Vorteilhaft kann der Gehalt an 1-Amino-2-R-cyclopent-1-en, wobei R eine gegenüber einer Aminogruppe zur Ausbildung einer Amidgruppe fähige funktionelle Gruppe darstellt, mindestens 0,001 Mol-%, vorzugsweise mindestens 0,01 Mol-%, insbesondere mindestens 0,03 Mol-%, besonders bevorzugt mindestens 0,08 Mol-%, bezogen auf 1 Mol Säureamidgruppen des Polyamids, betragen.

Vorteilhaft kann der Gehalt an 1-Amino-2-R-cyclopent-1-en, wobei R eine gegenüber einer Aminogruppe zur Ausbildung einer Amidgruppe fähige funktionelle Gruppe darstellt, höchstens 2,0 Mol-%, vorzugsweise höchstens 1 Mol-%, insbesondere höchstens 0,6 Mol-%, besonders bevorzugt höchstens 0,5 Mol-%, bezogen auf 1 Mol Säureamidgruppen des Polyamids, betragen.

Die erfindungsgemäßen Polyamide sind erhältlich, indem man die Umsetzung von zur Bildung eines Polyamids geeigneten Monomeren, Oligomeren oder deren Gemische zu einem Polyamid in Gegenwart eines Amins, ausgewählt aus der Gruppe bestehend aus 2-Methyl-1,5-Diaminopentan und 1-Amino-2-R-cyclopent-1-en, wobei R eine gegenüber einer Aminogruppe zur Ausbildung einer Amidgruppe fähige funktionelle Gruppe darstellt, durchführt.

Zur Herstellung der erfindungsgemäßen Polyamide können die für die Herstellung von Polyamiden aus den entsprechenden Monomeren üblichen Verfahrensbedingungen angewendet werden, wie sie beispielsweise in DE-A-14 95 198, DE-A-25 58 480, EP-A-129 196, DE-A-19 709 390, DE-A-35 34 817, WO 99/38908, WO 99/43734, WO 99/43732, WO 00/24808, WO 01/56984 oder in Polymerization Processes, Interscience, New York, 1977, S. 424-467, insbesondere S. 444-446, beschrieben sind.

In einer bevorzugten Ausgestaltung kann man die Polymerisation bzw. Polykondensation nach dem erfindungsgemäßen Verfahren in Gegenwart mindestens eines Pigments durchführen. Bevorzugte Pigmente sind Titandioxid, vorzugsweise in der Anatas- oder der Rutil-Kristallform, oder farbgebende Verbindungen anorganischer oder organischer Natur. Die Pigmente werden vorzugsweise in einer Menge von 0 bis 5 Gewichtsteile, insbesondere 0,02 bis 2 Gewichtsteile, jeweils bezogen auf 100 Gewichtsteile Polyamid, zugegeben. Die Pigmente können dem Reaktor mit den Ausgangsstoffen oder getrennt davon zugeführt werden.

Weiterhin kann zur Herstellung der Polyamide neben den beiden genannten, bevorzugten Verfahren die anionische Polymerisation herangezogen werden.

Bei der anionischen Polymerisation werden üblicherweise
a) ein Lactam oder eine MiscThung von Lactamen,
b) ein Lactamat oder eine Verbindung, die aus einem Lactam gemäß a) ein Lactamat freisetzt, oder Mischungen solcher Komponenten und
c) ein die Polymerisation regulierender Aktivator, miteinander umgesetzt unter Erhalt eines Polyamids.

Verfahren zur anionischen Polymerisation von Lactamen, die auch als alkalische Polymerisation von Lactamen bezeichnet wird, sowie geeignete Verbindungen a), b) und c) sind allgemein bekannt, beispielsweise aus US-A-3,206,418, US-A-3,207,713, US-A-3,494,999, US-A-3,793,255, US-A-4,233,433, US-A-4,393,193, US-A-4,503,014, US-A-5,747,634, WO-A-00/58387, WO-A-01/49906, International Polymer Processing 16(2) (2001) 172-182 oder Fourné, Synthetische Fasern, Carl Hanser Verlag, München/Wien, 1995, Seite 38-39.

Die erfindungsgemäßen Polyamide können vorteilhaft zur Herstellung von Fasern, Folien und Formkörper, die ein solches Polyamid enthalten, insbesondere aus einem solchen Polyamid bestehen, eingesetzt werden.

### Beispiele

In den Beispielen wurde die Lösungsviskosität als relative Lösungsviskosität in 96%-Schwefelsäure gemessen gemäß DIN 51562-1 bis -4.

Hierbei wurde 1 g Polymer auf 100 ml Lösung eingewogen und die Durchlaufzeit in einem Ubbelohde-Viskosimeter gegen das reine Lösungsmittel gemessen.

### Beispiel 1 (nicht erfindungsgemäß)

In einem Druckkessel wurden 500 kg (4419 mol) Caprolactam, 50 kg vollentsalztes Wasser und 1046 g (9 mol) 2-Methyl-1,5-diaminopentan unter Stickstoffatmosphäre auf eine Innentemperatur von 270°C aufgeheizt, direkt im Anschluss innerhalb einer Stunde auf Normaldruck entspannt und 60 Minuten nachkondensiert und ausgefahren.
Das ausgefahrene Polyamid wurde extrahiert, getrocknet und in der festen Phase auf eine relative Lösungsviskosität von RV=2,70 getempert.

### Vergleichsbeispiel 1

Es wurde wie in Beispiel 1 verfahren mit der Ausnahme, daß 1046 g (9 mol) Hexamethylendiamin anstelle von 2-Methyl-1,5-diaminopentan zugegeben wurde. Die Lösungsviskosität nach Temperung betrug RV = 2,71.

### Beispiel 2

Es wurde wie in Beispiel w verfahren mit der Ausnahme, dass 973 g (9 mol) 1-Amino-2-cyanocyclopent-1-en anstelle von 2-Methyl-1,5-diaminopentan zugegeben wurde.
Die Lösungsviskosität nach Temperung betrug RV = 2,69.

### Vergleichsbeispiel 2

Es wurde wie in Beispiel 1 verfahren mit der Ausnahme, daß 1081 g (9 mol) 6-Aminocapronsäure anstelle von 2-Methyl-1,5-diaminopentan zugegeben wurde.
Die Lösungsviskosität nach Temperung betrug RV = 2,70.

### Beispiel 3

Die Polymere aus Beispiel 1 und 2 und aus den Vergleichsbeispielen 1 und 2 wurden auf einer "Inventa" Pilot Spinnanlage im H4S-Verfahren bei 5500 m/min im Standard-Titer 44f12 dtex (rund) bei identischen Maschineneinstellungen versponnen. Das Streckverhältnis betrug 1:1,40. Anschließend wurden die derart hergestellten Textilgarne auf einer Rundstrickmaschine (FAK 3.5 von Lawson Hemphill) jeweils zu einem Strickschlauch mit gleichem Garngewicht verarbeitet. Die Strickschlauch-Probekörper von Beispiel 1 und Vergleichsbeispiel 1 sowie von Beispiel 2 und Vergleichsbeispiel 2 wurden dann jeweils gemeinsam in einem einzigen Färbebad gefärbt. Die Färbung erfolgte mit einem handelsüblichen Metallkomplexfarbstoff (0,3 % Acidolschwarz MSRL, Flottenverhältnis 1:20, 1,0 % Uniperol AC, pH 7, Starttemperatur von 40°C, mit Heizrate 1,5°/min auf 98°C, 60 min bei 98°C, mit Warmwasser ausspülen, trocknen). Die relative Farbtiefe (Farbstärke) der beiden Strickstücke wurde anschließend mit Hilfe eines Spektralfotometers (Colorflash C22S, Fa. Optronic) gemäß Methode Kubelka-Munk, analog DIN 53234 "Bestimmung der relativen Farbstärke", ermittelt.

**Tab. 1: Relative Farbstärke von Garnen [%] nach Konkurrenzfärbung**

| Beispiel 1 | Vergleichsbeispiel 1 | Beispiel 2 | Vergleichsbeispiel 2 |
|---|---|---|---|
| 250 | 100 * | 260 | 100 * |

| | | | |
|---|---|---|---|
| *auf 100 % normiert | | | |

Aus Tabelle 1 geht hervor, dass Garne, welche aus Polyamiden aus Beispiel 1 bzw. 2 hergestellt wurden, bei der Konkurrenzfärbung mit Garnen der Polyamide aus den entsprechenden Vergleichsbeispielen 1 und 2, deutlich tiefer eingefärbt sind.

Um eine vorgegebene Farbtiefe von Garnen zu erreichen, benötigen demnach Garne aus Polyamiden gemäß Beispiel 1 bzw. 2 aufgrund ihrer höheren Anfärbegeschwindigkeit im Vergleich zu Garnen aus Polyamiden gemäß Stand der Technik kürzere Verweilzeiten in den entsprechenden Färbebädern. Somit lassen sich höheren Prozessgeschwindigkeiten bei der Anfärbung von Garnen aus Polyamiden gemäß Beispiel 1 bzw. 2 im Vergleich zu Garnen aus Polyamiden gemäß Stand der Technik realisieren. Der vorliegenden Erfindung lag die Aufgabe zugrunde, ein Polyamid bereitzustellen, das eine gegenüber Polyamiden gemäß Stand der Technik erhöhte Anfärbegeschwindigkeit aufweist, sowie ein Verfahren zur Herstellung eines solchen Polyamids.

## Patentansprüche

1. Polyamid, dessen Hauptkette 1-Amino-2-R-cyclopent-1-en, wobei R eine gegenüber einer Aminogruppe zur Ausbildung einer Amidgruppe fähige funktionelle Gruppe darstellt, chemisch gebunden enthält.

2. Polyamid nach Anspruch 1, wobei R ausgewählt ist aus der Gruppe bestehend aus Carbonsäure, Carbonsäureester, Carbonsäureamid und Nitril.

3. Polyamid nach Anspruch 1, wobei R für Nitril steht.

4. Polyamid nach Anspruch 1, wobei R für Carbonsäure steht.

5. Polyamid-nach Anspruch 1, wobei R für Carbonsäureester steht.

6. Polyamid nach Anspruch 5, wobei R für einen Carbonsäureester ausgewählt aus der Gruppe bestehend aus Methyl-, Ethyl-, n-Propyl-, i-Propyl-, n-Butyl-, s-Butyl-, i-Butyl- oder t-Butylester steht.

7. Polyamid nach Anspruch 1, wobei die Hauptkette des Polyamids 2-Methyl-1,5-Diaminopentan chemisch gebunden enthält.

8. Polyamid nach den Ansprüchen 1 bis 7, wobei die Hauptkette des Polyamids 1-Amino-2-R-cyclopent-1-en ist, wobei R eine gegenüber einer Aminogruppe zur Ausbildung einer Amidgruppe fähige funktionelle Gruppe darstellt, mit einem Gehalt im Bereich von 0,001 Mol-% bis 2 Mol-%, bezogen auf 1 Mol Säureamidgruppen des Polyamids, chemisch gebunden enthält.

9. Verfahren zur Herstellung eines Polyamids, **dadurch gekennzeichnet, daß** man die Umsetzung von zur Bildung eines Polyamids geeigneten Monomeren zu einem Polyamid in Gegenwart von 1-Amino-2-R-cyclopent-1-en, wobei R eine gegenüber einer Aminogruppe zur Ausbildung einer Amidgruppe fähige funktionelle Gruppe darstellt, gemäß den Ansprüchen 1 bis 8 durchführt.

10. Verfahren zur Herstellung eines Polyamids, **dadurch gekennzeichnet, daß** man die Umsetzung von zur Bildung eines Polyamids geeigneten Oligomeren zu einem Polyamid in Gegenwart von 1-Amino-2-R-cyclopent-1-en, wobei R eine gegenüber einer Aminogruppe zur Ausbildung einer Amidgruppe fähige funktionelle Gruppe darstellt, gemäß den Ansprüchen 1 bis 8 durchführt.

11. Fasern, Folien und Formkörper, enthaltend ein Polyamid gemäß den Ansprüchen 1 bis 8.

## Claims

1. A polyamide whose main chain comprises chemically bound 1-amino-2-R-cyclopent-1-ene, where R is a functional group capable of combining with an amino group to form an amide group.

2. The polyamide according to claim 1 wherein R is selected from the group consisting of carboxylic acid, carboxylic ester, carboxylic amide and nitrile.

3. The polyamide according to claim 1 wherein R represents nitrile.

4. The polyamide according to claim 1 wherein R represents carboxylic acid.

5. The polyamide according to claim 1 wherein R represents carboxylic ester.

6. The polyamide according to claim 5 wherein R represents a carboxylic ester selected from the group consisting of methyl ester, ethyl ester, n-propyl ester, i-propyl ester, n-butyl ester, s-butyl ester, i-butyl ester and t-butyl ester.

7. The polyamide according to claim 1 wherein the main chain of said polyamide comprises chemically bound 2-methyl-1,5-diaminopentane.

8. The polyamide according to any of claims 1 to 7 wherein the main chain of said polyamide comprises chemically bound 1-amino-2-R-cyclopent-1-ene, where R is a functional group capable of combining with an amino group to form an amide group, at a level in the range from 0.001 mol% to 2 mol%, based on 1 mol of acid amide groups of said polyamide.

9. A process for preparing a polyamide, which comprises converting monomers suitable for forming a polyamide into a polyamide in the presence of 1-amino-2-R-cyclopent-1-ene, where R is a functional group capable of combining with an amino group to form an amide group, according to any of claims 1 to 8.

10. A process for preparing a polyamide, which comprises converting oligomers suitable for forming a polyamide into a polyamide in the presence of 1-amino-2-R-cyclopent-1-ene, where R is a functional group capable of combining with an amino group to form an amide group, according to any of claims 1 to 8.

11. Fibers, films and moldings comprising a polyamide according to any of claims 1 to 8.

## Revendications

1. Polyamide dont la chaîne principale contient sous une forme chimiquement liée du 1-amino-2-R-cyclopent-1-ène, dans lequel R représente un groupe fonctionnel capable de former un groupe amide par rapport à un groupe amino.

2. Polyamide suivant la revendication 1, dans lequel R est choisi parmi le groupe constitué d'acide carboxylique, d'ester d'acide carboxylique, d'amide d'acide carboxylique et de nitrile.

3. Polyamide suivant la revendication 1, dans lequel R représente du nitrile.

4. Polyamide suivant la revendication 1, dans lequel R représente de l'acide carboxylique.

5. Polyamide suivant la revendication 1, dans lequel R représente de l'ester d'acide carboxylique.

6. Polyamide suivant la revendication 5, dans lequel R représente un ester d'acide carboxylique choisi parmi le groupe constitué d'ester méthylique, éthylique, n-propylique, i-propylique, n-butylique, s-butylique, i-butylique ou t-butylique.

7. Polyamide suivant la revendication 1, dans lequel la chaîne principale du polyamide contient sous une forme chimiquement liée du 2-méthyl-1,5-diaminopentane.

8. Polyamide suivant les revendications 1 à 7, dans lequel la chaîne principale du polyamide contient sous une forme chimiquement liée du 1-amino-2-R-cyclopent-1-ène, dans lequel R représente un groupe fonctionnel capable de former un groupe amide par rapport à un groupe amino, en une teneur de l'ordre de 0,001 % molaire à 2 % molaires, par rapport à 1 mole de groupes amide d'acide du polyamide.

9. Procédé de préparation d'un polyamide, **caractérisé en ce qu'**on effectue la transformation de monomères appropriés pour la formation d'un polyamide en un polyamide en présence de 1-amino-2-R-cyclopent-1-ène, dans lequel R représente un groupe fonctionnel capable de former un groupe amide par rapport à un groupe amino, conformément aux revendications 1 à 8.

10. Procédé de préparation d'un polyamide, **caractérisé en ce qu'**on effectue la transformation d'oligomères appropriés pour former un polyamide en un polyamide en présence de 1-amino-2-R-cyclopent-1-ène, dans lequel R représente un groupe fonctionnel capable de former un groupe amide par rapport à un groupe amino, conformément aux revendications 1 à 8.

11. Fibres, feuilles et corps façonnés, contenant un polyamide suivant les revendications 1 à 8.
